# EUROPEAN PATENT APPLICATION

(11) **EP 3 188 342 A1**
(43) Date of publication of application: **05.07.2017**
(21) Application number: 16202817.9
(22) Date of filing: 08.12.2016
(51) Int. Cl.: H02J 7/00, B60L 11/18, H01M 10/44

(54) **SMART CHARGING SYSTEM FOR ELECTRIC VEHICLE BATTERY PACKS**

(30) Priority: 30.12.2015 US 201562272714 P; 20.01.2016 US 201615001260
(71) Applicant: Thunder Power New Energy Vehicle Development Company Limited, Central, Hong Kong (CN)
(72) Inventor: Chuang, Chi-Sheng, New Taipei City (TW)
(74) Representative: Trinks, Ole

(57) **Abstract**

A method of selectively charging a battery packs in a battery system of an electric vehicle may include selecting a first battery pack (502) from a plurality of battery packs in the battery system. The method may also include receiving one or more messages from the first battery pack (502). The one or more messages may inlcude indications of a voltage and a current associated with the first battery pack. The method may additionally include determining a charging voltage and a charging current for the first battery pack based at least in part on the voltage and the current associated with the first battery pack. The method may further include causing a battery charging circuit (504) to charge the first battery pack by applying the charging voltage and the charging current to the first battery pack.

## Description

### CROSS-REFERENCE TO RELATED APPLICATIONS

The present application claims priority to U.S. Provisional Patent Application No. 62/272,714, filed on December 30, 2015, the disclosure of which is hereby incorporated by reference in its entirety for all purposes.

### BACKGROUND

Exemplary embodiments of the present disclosure relate to battery management systems that may be used, for example, for managing power output and modes of one or more batteries in an electric vehicle.

An electric vehicle uses a battery pack as an energy source. To ensure that the electric vehicle operates properly, the battery pack is monitored and managed during discharge and charging, e.g. to maintain the battery pack within a certain range of temperature and other parameters. Operating within the working temperature ensures that the battery pack performs efficiently and has a long service life. Due to the large influence of temperature on the performance and the service life of the battery pack, the working temperature of the battery pack and the consistency of the working states of the battery cells within the battery pack are very important in the design of the electric vehicle and the battery pack. As such a battery management system (BMS) is typically used to manage the performance and operation of a rechargeable battery (e.g. a cell or battery pack), by protecting the battery from operating outside its working temperature, monitoring its state, and calculating and/or reporting data to other control systems in the vehicle. The BMS may also control recharging of the battery, e.g. by redirecting recovered or charger energy to the battery pack.

### BRIEF SUMMARY

In some embodiments, a battery-charging system for an electric vehicle may inlcude a battery system comprising a plurality of battery packs. The plurality of battery packs may inlcude a first battery pack, a communication bus, a battery charging circuit that is configurable to provide varying levels of current and voltage to individual battery packs in the battery system, and one or more microcontrollers. The one or more microcontrollers may be programmed to preform operations including receiving, through the communication bus, one or more messages from the first battery pack. The one or more messages may inlcude indications of a voltage and a current associated with the first battery pack. The operations may also include determining a charging voltage and a charging current for the first battery pack based at least in part on the voltage and the current associated with the first battery pack. The operations may additionally include causing the battery charging circuit to charge the first battery pack by applying the charging voltage and the charging current to the first battery pack.

In some embodiments, a method of selectively charging a battery packs in a battery system of an electric vehicle may include selecting, by one or more microcontrollers, a first battery pack from a plurality of battery packs in the battery system. The method may also include receiving, by the one or more microcontrollers through a communication bus, one or more messages from the first battery pack. The one or more messages may inlcude indications of a voltage and a current associated with the first battery pack. The method may additionally include determining, by the one or more microcontrollers, a charging voltage and a charging current for the first battery pack based at least in part on the voltage and the current associated with the first battery pack. The method may further include causing, by the one or more microcontrollers, a battery charging circuit to charge the first battery pack by applying the charging voltage and the charging current to the first battery pack. The battery charging circuit may be configurable to provide varying levels of current and voltage to individual battery packs in the battery system.

In various embodiments, one or more of the following features may be included in any combination and without limitation. The one or more messages from the first battery pack may further include an indication of series connections of individual battery cells in the first battery pack. Determining the charging voltage for the first battery pack may further be based at least in part on the series connections of the individual battery cells in the first battery pack. Determining the charging voltage for the first battery pack may further be based at least in part on summing a number of series connection of the individual battery cells in the first battery pack. The one or more messages from the first battery pack may further include an indication of parallel connections of individual battery cells in the first battery pack. Determining the charging current for the first battery pack may further be based at least in part on the parallel connections of the individual battery cells in the first battery pack. Determining the charging current for the first battery pack may further be based at least in part on summing a number of parallel connection of the individual battery cells in the first battery pack. The one or more microcontrollers may cause the battery charging circuit to charge the first battery pack independently from any other battery packs in the plurality of battery packs. The battery charging circuit may be configured to provide charging voltages of between 200 V and 500 V. The battery charging circuit may be configured to provide charging currents of between 0 A and 400 A.

### BRIEF DESCRIPTION OF THE DRAWINGS

A further understanding of the nature and advantages of the present invention may be realized by reference to the remaining portions of the specification and the drawings, wherein like reference numerals are used throughout the several drawings to refer to similar components. In some instances, a sub-label is associated with a reference numeral to denote one of multiple similar components. When reference is made to a reference numeral without specification to an existing sub-label, it is intended to refer to all such multiple similar components.
FIG. 1 illustrates a simplified diagram of an electric vehicle with a rechargeable battery system, according to some embodiments.
FIG. 2 illustrates a lithium-based battery that may be used in electric vehicles, according to some embodiments.
FIG. 3 illustrates a top view and an isometric view of a battery pack with a coolant loop, according to some embodiments.
FIG. 4 is a simlpified schematic diagram of an electric vehicle motor control system 400, according to some embodiments.
FIG. 5 illustrates a simplified schematic of a single battery pack, according to some embodiments.
FIG. 6 illustrates a simplified schematic of a plurality of battery packs connected to a charging circuit, according to some embodiments.
FIG. 7 illustrates a flowchart of a method of selectively charging a battery pack in a battery system of an electric vehicle, according to some embodiments.
FIG. 8 illustrates a flowchart of a method of determining a charging voltage and a charging current for a battery pack, according to some embodiments.

### DETAILED DESCRIPTION

Various example embodiments of the present disclosure will be described below with reference to the drawings constituting a part of the description. It should be understood that, although terms representing directions are used in the present disclosure, such as "front", "rear", "upper", "lower", "left", "right", and the like, for describing various exemplary structural parts and elements of the present disclosure, these terms are used herein only for the purpose of convenience of explanation and are determined based on the exemplary orientations shown in the drawings. Since the embodiments disclosed by the present disclosure can be arranged according to different directions, these terms representing directions are merely used for illustration and should not be regarded as limiting. Wherever possible, the same or similar reference marks used in the present disclosure refer to the same components.

Unless defined otherwise, all technical terms used herein have the same meanings as commonly understood by one of ordinary skill in the art to which the invention pertains. The embodiments of the invention and the various features and advantageous details thereof are explained more fully with reference to the non-limiting embodiments and examples that are described and/or illustrated in the accompanying drawings and detailed in the following description. It should be noted that the features illustrated in the drawings are not necessarily drawn to scale, and features of one embodiment may be employed with other embodiments as the skilled artisan would recognize, even if not explicitly stated herein. Descriptions of well-known components and processing techniques may be omitted so as to not unnecessarily obscure the embodiments of the invention. The examples used herein are intended merely to facilitate an understanding of ways in which the invention may be practiced and to further enable those of skill in the art to practice the embodiments of the invention. Accordingly, the examples and embodiments herein should not be construed as limiting the scope of the invention, which is defined solely by the appended claims and applicable law.

As used herein, the use of the terms "about" or "approximately" should be interpreted as within 10% of a given value, unless otherwise specified. The term "substantially" should be interpreted as encompassing greater than 85% of a thing, e.g. a component that is made "substantially" of plastic would comprise greater than 85% plastic.

Described herein are embodiments for a fast battery-charging circuit for an electric vehicle. An electric vehicle may include a battery system that may in turn include one or more battery packs. Each of the battery packs may include a variable number of individual battery cells that are connected in various combinations of parallel and series connections in order to increase the current and voltage provided by the battery pack above that of the individual battery cells. Instead of providing a one-size-fits-all current/voltage for charging each possible battery configuration, the embodiments described herein provide an intelligent charging circuit that is configured to determine a series connection structure and a parallel connection structure for a particular battery pack. Combining the series/parallel connection structures with the known voltage/current characteristics of an individual cell, the charging circuit can calculate the optimal charging voltage and charging current for each battery pack at charge time. The charging circuit can then provide a constant voltage at a constant current that is precisely tuned for the battery pack being charged. This not only increases the energy efficiency of the charging process, but also decreases the time required to completely charge a battery pack. This also provides a single battery-charging circuit that can optimally charge many different types of battery packs in the same battery system or across many different electric vehicle types.

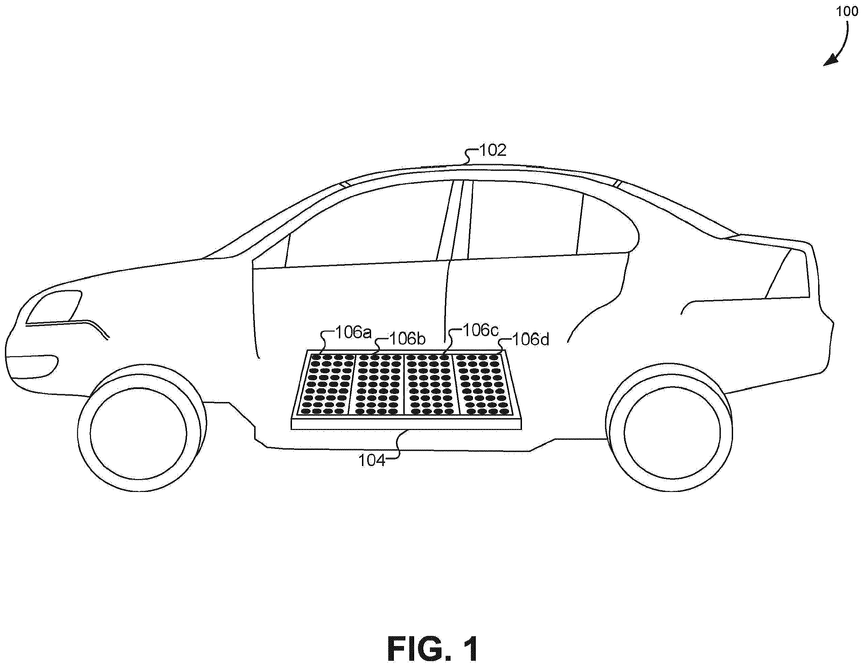

FIG. 1 illustrates a simplified diagram 100 of an electric vehicle 102 with a rechargeable battery system 104, according to some embodiments. The rechargeable battery system 104 may be comprised of one or more battery packs 106. A battery pack may be comprised of a plurality of individual battery cells that are electrically connected to provide a particular voltage/current to the electric vehicle 102. Depending on the embodiment, the electric vehicle 102 may include hybrid vehicles that operate using both fuel combustion and stored electric power, as well as fully electric vehicles that operate entirely from stored electric power.

The rechargeable battery system 104 represents a major component of the electric vehicle 102 in terms of size, weight, and cost. A great deal of effort goes into the design and shape of the rechargeable battery system 104 in order to minimize the amount of space used in the electric vehicle 102 while ensuring the safety of its passengers. In some electric vehicles, the rechargeable battery system 104 is located under the floor of the passenger compartment as depicted in FIG. 1. In other electric vehicles, the rechargeable battery system 104 can be located in the trunk or in the hood areas of the electric vehicle.

While a smaller number of larger battery cells could be more energy-efficient, the size and cost of of these larger batteries are prohibitive. Furthermore, larger batteries require more contiguous blocks of space in the electric vehicle 102. This prevents larger batteries from being stored in locations such as the floor of the passenger compartment as depicted in FIG. 1. Therefore, some embodiments use a large number of smaller battery cells that are coupled together to generate electrical characteristics that are equivalent to single larger cells. The smaller cells may be, for example, the size of traditional AA/AAA batteries, and may be grouped together to form a plurality of battery packs 106. Each battery pack may include a large number of individual battery cells. In one embodiment, 700 individual lithium-ion batteries are joined together to form a single battery pack 106a, and the rechargeable battery system 104 may include four battery packs 106, eight battery packs, ten battery packs, sixteen battery packs, and/or the like, connected in parallel or series until the electrical requirements of the electric vehicle 102 are satisfied. The individual battery cells included in each battery pack 106 may total in the thousands for a single electric vehicle 102.

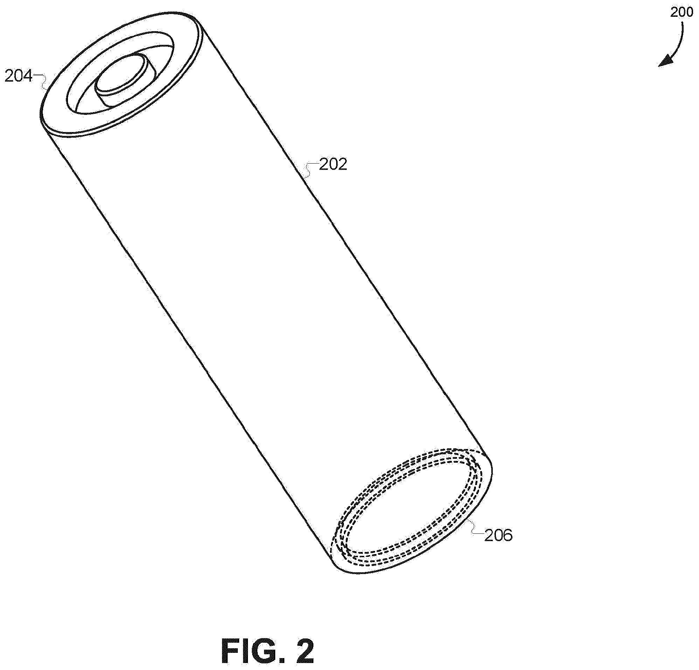

FIG. 2 illustrates a diagram 200 of a lithium-based battery 202 that may be used in electric vehicles, according to some embodiments. As used herein, the terms "battery", "cell", and "battery cell" may be used interchangeably to refer to any type of individual battery element used in a battery system. The batteries described herein typically include lithium-based batteries, but may also include various chemistries and configurations including iron phosphate, metal oxide, lithium-ion polymer, nickel metal hydride, nickel cadmium, nickel-based batteries (hydrogen, zinc, cadmium, etc.), and any other battery type compatible with an electric vehicle. For example, some embodiments may use the 6831 NCR 18650 battery cell from Panasonic®, or some variation on the 18650 form-factor of 6.5 cm x 1.8 cm and aproximately 45 g. The battery 202 may have at least two terminals. In some embodiments, a positive terminal 204 may be located at the top of the battery 202, and a negative terminal 206 may be located on the eopposite bottom side of the battery 202.

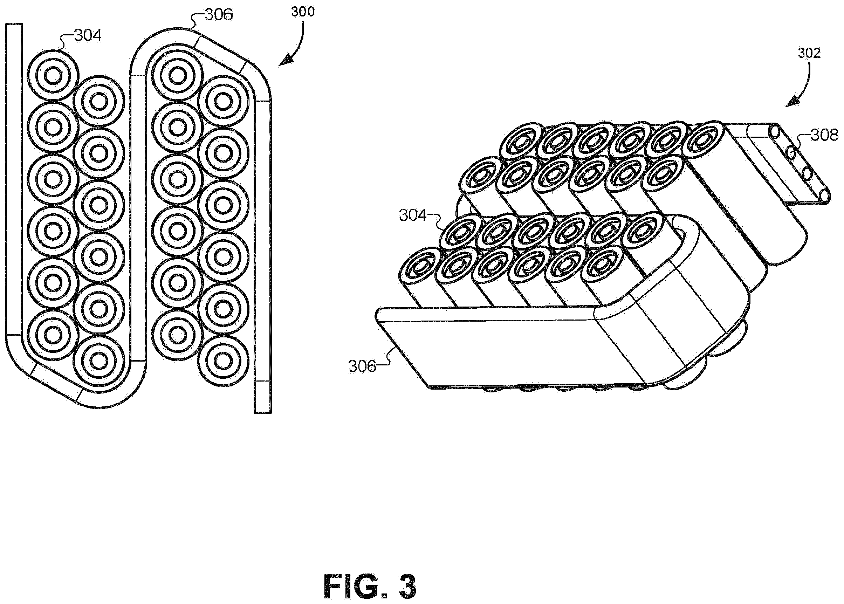

FIG. 3 illustrates a top view 300 and an isometric view 302 of a battery pack 304 with a coolant loop 306, according to some embodiments. The battery pack 304 depicted in FIG. 3 is greatly simplified from an actual battery pack that would be used in electric vehicle. The number of individual battery cells and cell rows has been greatly reduced in order to describe the elements of the present invention simply and clearly. It will be understood that actual battery packs would include many more individual battery cells and more complicated routing of the coolant loop 306.

The individual battery cells in the battery pack 304 are linearly arranged in a series of rows, with each individual battery cell being adjacent to another battery cell within the row. In some embodiments, there will be no appreciable gap between the individual battery cells within a single row. In order to maximize the number of individual battery cells per unit volume, adjacent rows of battery cells are offset by approximately the radius of one individual battery cell. Adjacent rows are then placed next to each other in the offset position depicted in FIG. 3 such that each individual battery cell in a first row is adjacent to or contacting two individual battery cells in a second row. In some embodiments (not shown) three or more rows are placed adjacent to each other with no appreciable gaps therebetween.

The battery pack 304 of FIG. 3 includes pairs adjacent rows separated by a coolant loop 306. The electric vehicle may be configured to pump liquid coolant through the coolant loop 306 in order to transfer heat from the battery pack 304 to a radiator or other heat exchange system. The coolant loop 306 may include one or more coolant tubes 308 through which liquid coolant may be circulated. In some embodiments, the electric vehicle may use a dedicated coolant loop for the battery pack 304, while other embodiments may utilize an existing engine coolant system. In some embodiments, the coolant loop 306 may also be coupled to a heating system, such that the battery pack 304 can be heated when extreme weather causes the ambient temperature to drop below a preferred operating temperature range of the individual battery cells.

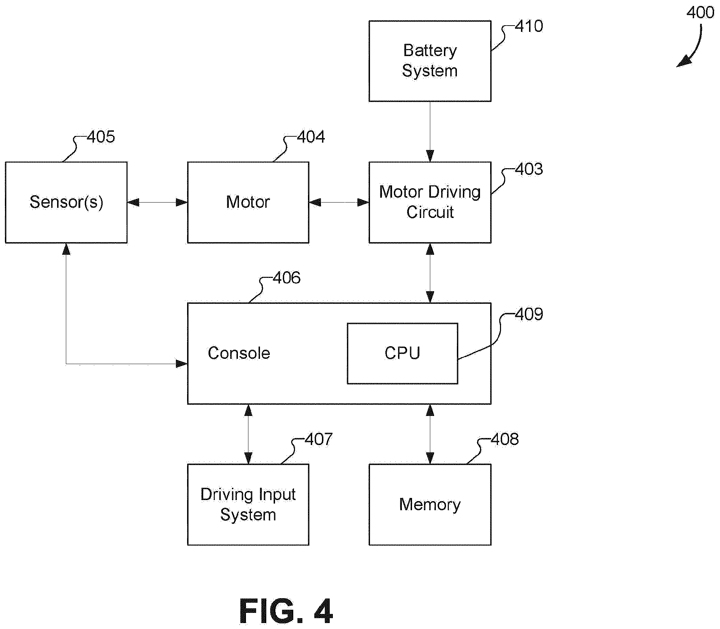

FIG. 4 is a simlpified schematic diagram of an electric vehicle motor control system 400, according to some embodiments. As shown in FIG. 4, the control system 400 for controlling an electric vehicle may include a battery system 410, a motor driving circuit 403, a motor 404, one or more sensors 405, a console 406 that may include a CPU 409, a driving input system 407, and/or a memory 408. Note that the simplified nature of this diagram may omit the many other onboard systems and compenent that one having skill in the art would understand to be present in an electric vehicle. These systems and components have been omitted for clarity.

The battery system 410 may provide the motor 404 with operating power. The motor driving circuit 403 may be connected between the motor 404 and the battery system 410 to transmit the power of the battery system 410 to the motor 404. The working state of the motor 404 may be controlled by controlling the voltage/current transmitted to the motor 404. The one or more sensors 405 may be used for sensing the current operating parameters (e.g., a speed, a torque, etc.) of the motor 404 and sending the operating parameters to the console 406. According to these parameters, the console 406 can judge the current operating state of the motor 404 and send a control signal to the motor driving circuit 403 to change the voltage/current input to the motor 404, thus changing the operating state of the motor. The console 406 may be further connected with the driving input system 407 and the memory 408. The driving input system 407 may be configured to receive a target operating state for the motor 404 to be provided to the console 406. The memory 408 may be used to store an operational model for the motor 404, and the console 406 may be configured to read data from and write data to the operational model of the motore 404.

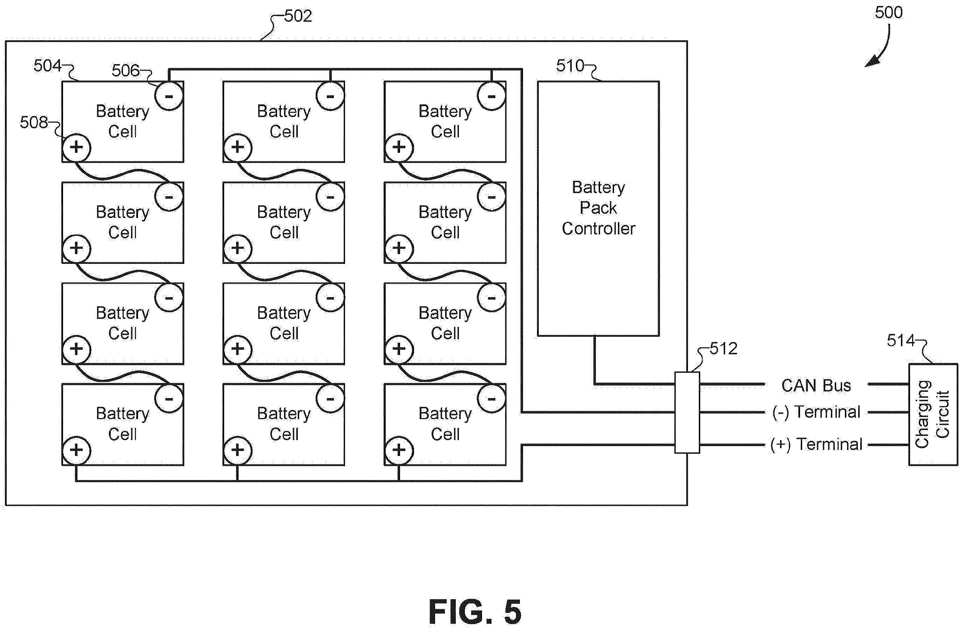

FIG. 5 illustrates a simplified schematic 500 of a single battery pack 502, according to some embodiments. As used herein, the term "battery pack" may include a single battery pack amongst a plurality of battery packs in a battery system in an electric vehicle. A battery pack may include a plurality of individual battery cells. In some embodiments, the battery system may include battery packs that are individually chargable by the battery-charging circuitry. In other embodiments, each individual cell in the battery system of the elecetric vehicle may be charged together through a single interface. In these embodiments, the "battery pack" would include all of the individual battery cells included in the battery system. Therefore, the term "battery pack" may be interpreted from the perspective of the battery charging circuitry to be any unit that is individually addressable by the battery charging circuitry, regardless of the number of individual cells.

In this embodiment, the battery pack 502 is comprised of a plurality of individual battery cells 504. It will be understood by one having skill in the art that this battery pack 502 is greatly simplified compared to those that would be used in actual electric vehicles. Specifically, the number of individual battery cells 504 has been reduced in order to clearly show the series and parallel connections that may exist within a battery pack. In this embodiment, the battery pack 502 is comprised of 12 individual battery cells that have identical voltage and current characteristics. In some embodiments, the battery system of the electric vehicle may include a plurality of battery packs that are the same as or different from the battery pack 502 depicted in FIG. 5. In some embodiments, the battery pack 502 of FIG. 5 may represent the entire battery system of an electric vehicle.

In order to increase the voltage provided by the battery pack 502 above the voltage provided by the individual battery cells 504, a plurality of individual battery cells 504 may be connected in series. A series connection will provide a voltage that is a multiple of the voltage provided by each individual battery cell 504 at a current that is approximately the same as the current provided by each individual battery cell 504. In the example of FIG. 5, each of the vertical columns of individual battery cells 504 is wired in series. Specifically, the negative terminal 506 of one battery is electrically connected to the positive terminal 508 of another battery. Each of the vertical columns in FIG. 5 would produce approximately 4 times the voltage of each individual battery cell 504. In practice, the series connection of individual battery cells 504 can produce voltages that are in excess of 100 V.

In addition to the series connections, the individual battery cells 504 can also be electrically connected in parallel in order to source a larger amount of current. Individual battery cells can be connected in parallel, or a plurality of individual battery cells 504 connected in series can then be connected in parallel. As is depicted in FIG. 5, the three groups of series-connected individual battery cells 504 can be connected in parallel by connecting the same terminals of individual battery cells in each group. For example, the negative terminal of the first cell in each series-connected group can be electrically connected, and the positive terminal of the last cell in each series-connected group can be electric connected. By using both series and parallel connections, the current and voltage can both be increased dramatically.

The battery pack 502 may include a battery pack controller 510, which may be comprised of one or more microcontrollers, one or more memory devices, and/or one or more bus interfaces. The battery pack controller 510 can store information in one or more memory devices. Such information may include a make/model of each individual battery cell 504, the voltage characteristics of each individual battery cell 504, current characteristics of each individual battery cell 504, a number of series connections between individual battery cells 504, a number of parallel connections between the individual battery cells 504, an overall voltage provided by the battery pack 502, an overall current provided by the battery pack 502, and/or the like. This information may be provided to a microcontroller of the charging circuit 514 upon request. Using this architecture, the battery pack controller 510 can be programmed with the battery contents and connections of the battery pack 502 when it is manufactured. Thus, many different types of battery pack can be manufactured and put into different electric vehicles, each of which may use different battery cells in different series/parallel connections, and each of which will still be compatible with the same charging circuit 514. Because all of the descriptive information of the battery pack 502 needed to optimally charge the battery pack 502 is stored in the battery pack controller 510, this information can simple be provided to the charging circuit 514 in order to optimize the charging voltage and charging current for that particular battery pack 502 as will be described in greater detail below.

The battery pack controller 510 can be connected to a communication bus that is shared between other battery packs and a charging circuit 514. For example, a CAN bus may be used to to communicate between the microcontrollers of various battery packs and a charging circuit 514. The shared bus may facilitate individual charging of battery packs in the battery system. For example, a charging circuit 514 can query the battery pack controller 510 of battery pack 502 specifically, without necessarily addressing the battery pack controllers of other battery packs. The communication bus can be connected to a terminal 512 of the battery pack 502. The terminal may also provide (-) and (+) electrical connections to the charging circuit and to the motor driving circuit described above in FIG. 4. Other connections through the terminal 512 may also be provided by the battery pack 502, such as an interface for a coolant loop.

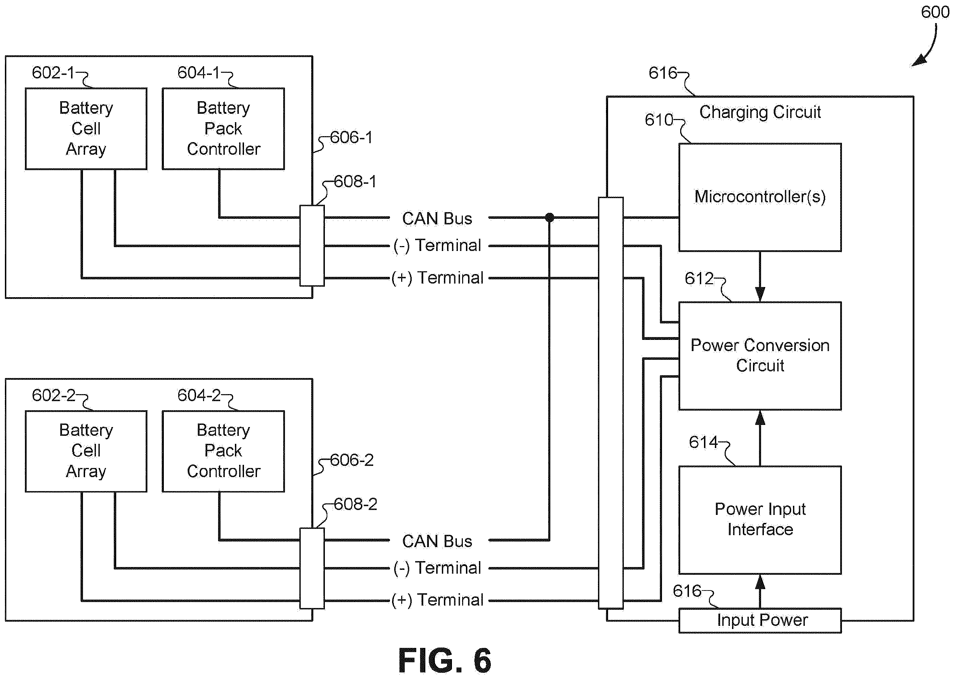

FIG. 6 illustrates a simplified schematic 600 of a plurality of battery packs 606 connected to a charging circuit 616, according to some embodiments. In this embodiment, the battery system is comprised of a plurality of battery packs 606 that are individually addressable by the charging circuit 616. Thus, the charging circuit 616 can use the communication bus to connect individually with each of the individual battery packs 606. In some embodiments, the charging circuit 616 may include separate electrical interfaces (e.g.,(-) and (+) terminals) for each of the individual battery packs 606. This allows the charging circuit 616 to provide separate currents and/or voltages that are specifically calculated to match the series/parallel voltage/current requirements for each of the individual battery packs 606.

The charging circuit 616 may include one or more microcontrollers 610, a power conversion circuit 612, and/or a power input interface 614. The power input interface 614 may receive input power 616 from an external charging station or from an internal power source, such as a braking system. The power input interface 614 can receive the raw input power 616 and convert/regulate the raw input power 616 into a form that is usable by the power conversion circuit 612. The one or more microcontrollers 610 can query the battery pack controller 604 of a specific battery pack 606 to determine the voltage/current characteristics that are required to optimally charge the battery pack 606. The one or more microcontrollers 610 can then instruct the power conversion circuit 612 to step up/down the DC voltage/current received from the power input interface 614 to meet specific needs of the battery pack 606.

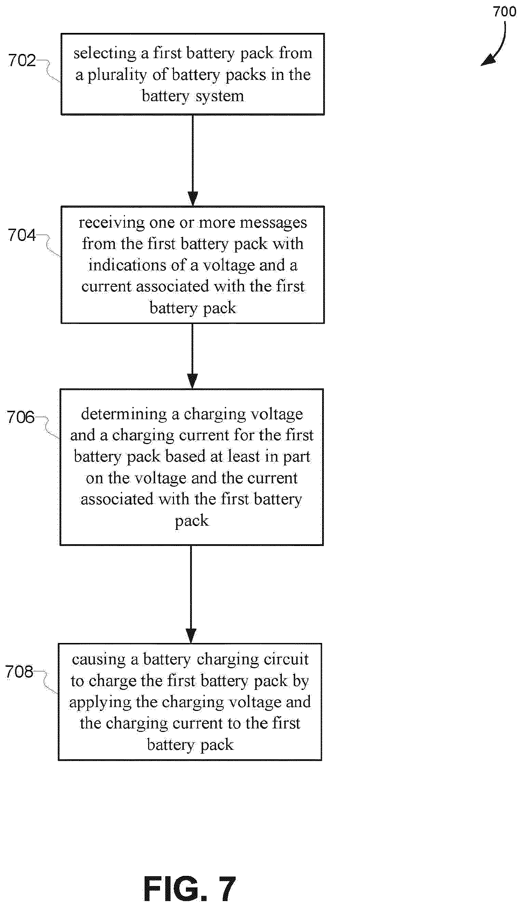

FIG. 7 illustrates a flowchart 700 of a method of selectively charging a battery pack in a battery system of an electric vehicle, according to some embodiments. The method may be performed by one or more microcontrollers of a charging circuit. The method may include selecting a first battery pack from the plurality of battery packs in the battery system (702). The charging circuit may receive power information from each of the individual battery packs and determine when a battery pack is running low and needs to be charged. Additionally, the charging circuit may receive input power from an external power source and begin charging individual battery packs by selecting the battery pack that has the lowest remaining charge.

The method may also include receiving one or more messages from the first battery pack (704). The one or more messages may be received through a communication bus that is specific to the first battery pack or that is shared amongst the plurality of battery packs. The message(s) may include indications of a voltage and/or a current associated with the first battery pack. For example, the message(s) may include a make/model number for an individual battery cell that can be used to look up a cell voltage/current stored by the charging circuit. Alternatively, the message(s) may include the voltage/current provided by each individual battery cell. In some embodiments, the message(s) may include a total voltage/current provided by the first battery pack.

The method may additionally include determining the charging voltage and a charging current for the first battery pack (706). The charging voltage and charging current may be determined based at least in part on the voltage and current associated with the first battery pack. For example, determining a charging voltage for the first battery pack may be determined based on summing a number of series connections of individual battery cells in the first battery pack. Similarly, determining a charging current for the first battery pack may be determined based on summing a number of parallel connections of individual battery cells in the first battery pack.

The method may further include causing a battery charging circuit to charge the first battery pack by applying the charging voltage and the charging current to the first battery pack (708). In some embodiments, the battery charging circuit can charge the first battery pack independently from any other battery packs in the plurality of battery packs. In other embodiments, charging the first battery pack may include charging all of the other battery packs in the battery system simultaneously. The charging circuitry may be configurable to provide variable voltages/currents depending on the needs of a particular battery pack. For example, the battery charging circuitry may be configured to provide charging voltages of between 200 V and 500 V. Similarly, the battery charging circuitry may be configured to provide charging currents of between 0 A and 400 A.

It should be appreciated that the specific steps illustrated in FIG. 7 provide particular methods of charging a battery pack according to various embodiments of the present invention. Other sequences of steps may also be performed according to alternative embodiments. For example, alternative embodiments of the present invention may perform the steps outlined above in a different order. Moreover, the individual steps illustrated in FIG. 7 may include multiple sub-steps that may be performed in various sequences as appropriate to the individual step. Furthermore, additional steps may be added or removed depending on the particular applications. One of ordinary skill in the art would recognize many variations, modifications, and alternatives.

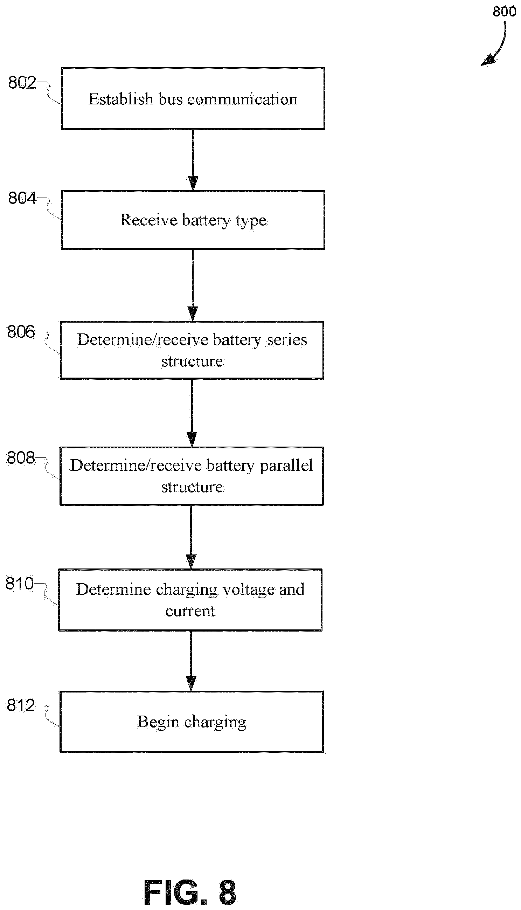

FIG. 8 illustrates a flowchart 800 of a method of determining a charging voltage and a charging current for a battery pack, according to some embodiments. This method may be considered a specific method of the more general method of flowchart 700 described above. This method may include establishing a bus communication between the microcontroller of the battery charging circuitry and a collection of batteries (802). The collection of batteries may be one of many battery packs, or an entire battery system of an electric vehicle. The method may also include receiving a battery type (804). Battery type may indicate a current sourced by each battery cell and a voltage provided by each battery cell. The method may additionally include determining or receiving a battery series structure (806). The battery series structure may define how batteries are connected in series in the collection of batteries. Similarly, the method may include determining or receiving a battery parallel structure (808). As with the series structure, the parallel structure may define how batteries are connected in parallel in the collection of batteries. The method may further include determining a charging voltage and charging current (810). As described above, the charging voltage may be determined at least in part by the battery series structure, and the charging current may be determined at least in part by the battery parallel structure. Finally, the method may include beginning to charge the collection of batteries using the charging current and/or charging voltage (812).

It should be appreciated that the specific steps illustrated in FIG. 8 provide particular methods of determining charging voltages/currents according to various embodiments of the present invention. Other sequences of steps may also be performed according to alternative embodiments. For example, alternative embodiments of the present invention may perform the steps outlined above in a different order. Moreover, the individual steps illustrated in FIG. 8 may include multiple sub-steps that may be performed in various sequences as appropriate to the individual step. Furthermore, additional steps may be added or removed depending on the particular applications. One of ordinary skill in the art would recognize many variations, modifications, and alternatives.

In the foregoing description, for the purposes of explanation, numerous specific details were set forth in order to provide a thorough understanding of various embodiments of the present invention. It will be apparent, however, to one skilled in the art that embodiments of the present invention may be practiced without some of these specific details.In other instances, well-known structures and devices are shown in block diagram form.

The foregoing description provides exemplary embodiments only, and is not intended to limit the scope, applicability, or configuration of the disclosure. Rather, the foregoing description of the exemplary embodiments will provide those skilled in the art with an enabling description for implementing an exemplary embodiment. It should be understood that various changes may be made in the function and arrangement of elements without departing from the spirit and scope of the invention as set forth in the appended claims.

Specific details are given in the foregoing description to provide a thorough understanding of the embodiments. However, it will be understood by one of ordinary skill in the art that the embodiments may be practiced without these specific details. For example, circuits, systems, networks, processes, and other components may have been shown as components in block diagram form in order not to obscure the embodiments in unnecessary detail. In other instances, well-known circuits, processes, algorithms, structures, and techniques may have been shown without unnecessary detail in order to avoid obscuring the embodiments.

Also, it is noted that individual embodiments may have beeen described as a process which is depicted as a flowchart, a flow diagram, a data flow diagram, a structure diagram, or a block diagram. Although a flowchart may have described the operations as a sequential process, many of the operations can be performed in parallel or concurrently. In addition, the order of the operations may be rearranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

In the foregoing specification, aspects of the invention are described with reference to specific embodiments thereof, but those skilled in the art will recognize that the invention is not limited thereto. Various features and aspects of the above-described invention may be used individually or jointly. Further, embodiments can be utilized in any number of environments and applications beyond those described herein without departing from the broader spirit and scope of the specification. The specification and drawings are, accordingly, to be regarded as illustrative rather than restrictive.

## Claims

1. A battery-charging system for an electric vehicle, the battery-charging system comprising:
- a battery system comprising a plurality of battery packs, the plurality of battery packs comprising a first battery pack;
- a communication bus;
- a battery charging circuit that is configurable to provide varying levels of current and voltage to individual battery packs in the battery system; and
- one or more microcontrollers programmed to preform operations comprising:
- receiving, through the communication bus, one or more messages from the first battery pack, wherein the one or more messages comprise indications of a voltage and a current associated with the first battery pack;
- determining a charging voltage and a charging current for the first battery pack based at least in part on the voltage and the current associated with the first battery pack; and
- causing the battery charging circuit to charge the first battery pack by applying the charging voltage and the charging current to the first battery pack.

2. The battery-charging system of claim 1, wherein the one or more messages from the first battery pack further comprise an indication of series connections of individual battery cells in the first battery pack.

3. The battery-charging system of claim 2, wherein determining the charging voltage for the first battery pack is further based at least in part on the series connections of the individual battery cells in the first battery pack, or
wherein determining the charging voltage for the first battery pack is further based at least in part on summing a number of series connection of the individual battery cells in the first battery pack.

4. The battery-charging system of one of the preceding claims, wherein the one or more messages from the first battery pack further comprise an indication of parallel connections of individual battery cells in the first battery pack.

5. The battery-charging system of claim 4, wherein determining the charging current for the first battery pack is further based at least in part on the parallel connections of the individual battery cells in the first battery pack, or
wherein determining the charging current for the first battery pack is further based at least in part on summing a number of parallel connection of the individual battery cells in the first battery pack.

6. The battery-charging system of one of the preceding claims, wherein the one or more microcontrollers cause the battery charging circuit to charge the first battery pack independently from any other battery packs in the plurality of battery packs.

7. The battery-charging system of one of the preceding claims, wherein the battery charging circuit is configured to provide charging voltages of between 200 V and 500 V, or
wherein the battery charging circuit is configured to provide charging currents of between 0 A and 400 A.

8. A method of selectively charging a battery packs in a battery system of an electric vehicle, the method comprising:
- selecting, by one or more microcontrollers, a first battery pack from a plurality of battery packs in the battery system;
- receiving, by the one or more microcontrollers through a communication bus, one or more messages from the first battery pack, wherein the one or more messages comprise indications of a voltage and a current associated with the first battery pack;
- determining, by the one or more microcontrollers, a charging voltage and a charging current for the first battery pack based at least in part on the voltage and the current associated with the first battery pack; and
- causing, by the one or more microcontrollers, a battery charging circuit to charge the first battery pack by applying the charging voltage and the charging current to the first battery pack, wherein the battery charging circuit is configurable to provide varying levels of current and voltage to individual battery packs in the battery system.

9. The method of claim 8, wherein the one or more messages from the first battery pack further comprise an indication of series connections of individual battery cells in the first battery pack.

10. The method of claim 9, wherein determining the charging voltage for the first battery pack is further based at least in part on the series connections of the individual battery cells in the first battery pack, or
wherein determining the charging voltage for the first battery pack is further based at least in part on summing a number of series connection of the individual battery cells in the first battery pack.

11. The method of one of claims 8 to 10, wherein the one or more messages from the first battery pack further comprise an indication of parallel connections of individual battery cells in the first battery pack.

12. The method of claim 11, wherein determining the charging current for the first battery pack is further based at least in part on the parallel connections of the individual battery cells in the first battery pack, or wherein determining the charging current for the first battery pack is further based at least in part on summing a number of parallel connection of the individual battery cells in the first battery pack.

13. The method of one of claims 8 to 12, wherein the one or more microcontrollers cause the battery charging circuit to charge the first battery pack independently from any other battery packs in the plurality of battery packs.

14. The method of one of claims 8 to 13, wherein the battery charging circuit is configured to provide charging voltages of between 200 V and 500 V, or wherein the battery charging circuit is configured to provide charging currents of between 0 A and 400 A.
